# EUROPÄISCHE PATENTANMELDUNG

(11) **EP 4 801 018 A1**
(43) Veröffentlichungstag der Anmeldung: **02.09.2026**
(21) Anmeldenummer: 25160302.3
(22) Anmeldetag: 26.02.2025
(51) Int. Cl.: H04L 69/24, H04L 41/045, H04L 47/36, H04W 28/18

(54) **BESTIMMUNG EINER ROAMING-MTU-GRÖSSE IN TELEKOMMUNIKATIONSNETZEN**

(71) Anmelder: Deutsche Telekom AG, 53113 Bonn (DE)
(72) Erfinder: SCHRAUB, Stefan, 61239 Ober-Mörlen (DE); MELANDER, Mari, 53225 Bonn (DE); Biewald, Manuel, 95514 Neustadt am Kulm (DE); AMEND, Markus, 63667 Nidda (DE); NÖCKEL, Philipp, 53721 Siegburg (DE)
(74) Vertreter: karo IP

(57) **Zusammenfassung**

Verfahren und System zur Übertragung von Datenpaketen in einer Ende zu Ende (E2E) Verbindung innerhalb einer IP-basierten Telekommunikationsnetzwerk-Infrastruktur unter Verwendung einer einheitlichen Datenpaketgröße (MTU, Maximum Transmission Unit), wobei die Datenpakete von einem ersten Telekommunikationsanbieter über einen IP-Exchange Anbieter (IPX-Provider) zu einem zweiten Telekommunikationsanbieter übertragen werden, wobei
- für die beiden Telekommunikationsanbieter und den IPX-Provider die Größe einer für ihn jeweils nutzbaren MTU einer zentralen Verwaltungseinheit mitgeteilt werden,
- die zentrale Verwaltungseinheit als einheitliche MTU die kleinste der mitgeteilten MTUs bestimmt,
- die zentrale Verwaltungseinheit die Größe der einheitlichen MTU dem ersten Telekommunikationsanbieter übermittelt und
- der erste Telekommunikationsanbieter die Datenpakete unter Verwendung der einheitlichen MTU über den IPX Provider an den zweiten Telekommunikationsanbieter überträgt.

## Beschreibung

Die Erfindung betrifft ein Verfahren und ein System zur Übertragung von Datenpaketen in einer Ende zu Ende (E2E) Verbindung innerhalb einer IP-basierten Telekommunikationsnetzwerk-Infrastruktur unter Verwendung einer einheitlichen Datenpaketgröße (MTU, Maximum Transmission Unit), wobei die Datenpakete von einem ersten Telekommunikationsanbieter über einen IP-Exchange Anbieter (IPX-Provider) zu einem zweiten Telekommunikationsanbieter übertragen werden.

In der heutigen Telekommunikationsinfrastruktur erfolgt die Übertragung von Datenpaketen meist über verschiedene Netzwerke, die von unterschiedlichen Telekommunikationsanbietern betrieben werden. Ein wesentliches Element für den internationalen Austausch von Datenverkehr bildet das IPX-Netzwerk (IP Exchange, IPX). Dieses globale, IP-basierte Vermittlungsnetz wurde entwickelt, um die Interoperabilität zwischen unterschiedlichsten Telekommunikationsanbietern sicherzustellen und einen effizienten Datentransfer zwischen deren Diensten zu ermöglichen. Innerhalb dieser Netzwerkinfrastruktur spielt die Maximum Transmission Unit (MTU) eine zentrale Rolle, da sie die maximale Größe eines Datenpakets in Bytes definiert, das über ein Netzwerkprotokoll, beispielsweise das Internetprotokoll (IP) auf OSI-Schicht 3, übertragen werden kann, ohne dass eine Fragmentierung erforderlich ist.

Gegenwärtig ist die MTU am Vermittlungsübergabepunkt zwischen verschiedenen Internet Service Providern (ISPs) im IPX-Netzwerk gemäß den GSMA PRD IR.34-v17.0 "Guidelines for IPX Provider Networks" auf 1500 Byte festgelegt. Das bedeutet, dass Datenpakete mit einer Größe von bis zu 1500 Byte ohne Fragmentierung zwischen den Netzwerken übertragen werden können. Auch Endgeräte, wie etwa Smartphones, verwenden typischerweise eine MTU von 1500 Byte für die Übertragung ihrer Datenpakete. Während diese Festlegung eine einheitliche und effiziente Übertragung ermöglichen soll, gibt es dennoch Unterschiede zwischen den von verschiedenen ISPs unterstützten MTU-Werten.

Ein grundlegendes Problem tritt insbesondere bei der Datenübertragung über IPX-Knoten im Roaming-Verkehr auf. In diesen Szenarien werden Datenpakete zusätzlich in einen GTP-Tunnel (GPRS Tunneling Protocol) eingepackt, um die Mobilfunkkommunikation über die verschiedenen Netzwerke hinweg zu ermöglichen. Diese "GTP-Kapselung" erzeugt jedoch einen zusätzlichen Overhead von bis zu 40 Byte, wodurch sich die tatsächlich nutzbare Paketgröße in der Ende-zu-Ende-Kommunikation entsprechend reduziert. Das führt dazu, dass ein ursprünglich 1500 Byte großes Paket durch die GTP-Kapselung vergrößert wird, wodurch die tatsächlich übertragbare Nutzlast sinkt und die zulässige MTU-Grenze von 1500 Byte überschritten wird. Infolgedessen müssen diese Pakete spätestens bei der Übertragung im IPX-Netz fragmentiert werden, um weiterhin über die bestehende Infrastruktur transportiert werden zu können.

Zusätzlich zur GTP-Kapselung kann das Datenpaket weitere Netzwerk-Header enthalten, die zu weiterem Overhead beitragen. Solche Header sind beispielsweise der IPv4-Header (typischerweise 20 Byte), der UDP-Header (8 Byte) und der GTP-U-Header (mindestens 8 Byte, kann aber mit Erweiterungen größer sein).

Der kombinierte Overhead von mindestens 40 Byte stellt dabei nur einen Mindestwert dar. In einigen Fällen kann die nutzbare Paketgröße durch zusätzliche Faktoren, etwa durch die seltene Nutzung von GTP-U-Erweiterungen oder die geplante Verwendung von IPSec in Kombination mit GTP-U, weiter reduziert werden. Die daraus resultierende Fragmentierung beeinträchtigt die Netzwerkeffizienz erheblich, da sie zu höheren Latenzen, erhöhter Prozessorauslastung in Netzwerkknoten und potenziellen Paketverlusten führen kann.

Ein naheliegender Ansatz zur Vermeidung der durch GTP-Tunnel verursachten Fragmentierung wäre eine Vergrößerung der MTU in der IPX-Übertragung. Dies scheitert jedoch an der Notwendigkeit einer einheitlichen Vereinbarung zwischen den Roaming- und IPX-Partnern, da eine solche Anpassung eine koordinierte Umsetzung auf verschiedenen Netzebenen erfordert. Alternative Lösungen wie Path MTU Discovery, die beispielsweise das Internet Control Message Protocol (ICMP) nutzen, haben sich als unzuverlässig erwiesen. So wird Path MTU Discovery in vielen Fällen nicht von allen Geräten in der Übertragungskette unterstützt oder es werden die relevanten ICMP-Nachrichten nicht weitergeleitet. Da es somit an praktikablen Alternativen fehlt, bleibt es bei der bislang verwendeten maximalen Paketgröße von 1500 Byte.

Diese Beschränkung führt zu erhöhten Anforderungen an die Netzwerkeinheiten, die für die Fragmentierung der Pakete verantwortlich sind und an die Empfänger, die die fragmentierten Pakete wieder zusammensetzen müssen. Darüber hinaus vergrößert sich aus einer Ende-zu-Ende-Sicht das zur Übertragung der eigentlichen Nutzlast erforderliche Datenvolumen, da fragmentierte Pakete zusätzlichen Overhead erzeugen. Das resultiert in einer erhöhten Gesamtlatenz und einer verringerten Übertragungszuverlässigkeit, da anstelle eines einzigen Pakets nun mehrere Fragmente transportiert und korrekt zusammengesetzt werden müssen.

Dabei sind Kommunikationssysteme bereits heute darauf ausgelegt, MTU-Größen von mehr als 1500 Byte zu unterstützen. Selbst wenn jedoch alle beteiligten Netzwerke höhere MTU-Werte unterstützen, würde die aktuell gültige Standardgrenze von 1500 Byte weiterhin als Limit wirken. Die starre Festlegung auf diesen Wert verhindert somit die Nutzung der tatsächlich vorhandene Netzwerkkapazitäten und schränkt zukünftige Optimierungsmöglichkeiten ein.

Aufgabe der vorliegenden Erfindung ist es nunmehr, die Flexibilität bei der Übertragung von Datenpaketen in Kommunikationssystemen zu erhöhen und gleichzeitig die Effizienz der Datenübertragung, insbesondere durch eine Reduzierung der Fragmentierung, zu verbessern.

Diese Aufgabe wird durch das Verfahren nach Anspruch 1 und das System nach Anspruch 11 gelöst. Vorteilhafte Ausgestaltungen sind in den Unteransprüchen genannt.

Entsprechend der Hauptansprüche ermöglicht die vorliegende Erfindung eine optimierte Übertragung von Datenpaketen in einer Ende-zu-Ende (E2E) Verbindung innerhalb einer IP-basierten Telekommunikationsnetzwerk-Infrastruktur. Erfindungsgemäß wird dabei die maximal nutzbare Datenpaketgröße (Maximum Transmission Unit, MTU) zwischen den beteiligten Netzwerkteilnehmern - zwei Telekommunikationsanbietern und mindestens einem dazwischengeschalteten IPX-Provider - dynamisch abgestimmt. Anstatt sich auf eine feste MTU von 1500 Byte zu beschränken, wird eine zentrale Verwaltungseinheit genutzt, um die von den Netzwerkteilnehmern unterstützten MTU-Werte zu erfassen und eine einheitliche MTU, deren Größe sich insbesondere auch in Byte bemisst, zu bestimmen. Die kleinste der übermittelten MTUs wird dabei als verbindlicher Wert für die gesamte Übertragungskette festgelegt. Dies ist insbesondere für den internationalen Datenverkehr über IPX-Netzwerke von Bedeutung, da hier unterschiedliche Netzwerkkonfigurationen und technische Einschränkungen der beteiligten Anbieter aufeinandertreffen.

Durch diesen erfindungsgemäßen Aushandlungsprozess entfallen aufwendige Abstimmungsmaßnahmen zwischen den Netzbetreibern, die bislang eine technische Hürde für eine flexiblere Handhabung der MTU darstellten. Die Erfindung ermöglicht es zudem, die ausgehandelten Werte in einer zentralen Datenbank zu speichern und über ein MTU Size Agreement/Handshake zu sichern. Dies stellt nicht nur sicher, dass alle an einer Verbindung beteiligten Netzwerkteilnehmer die gleiche MTU verwenden, sondern ermöglicht auch eine nahtlose Integration in bestehende Roaming-Vereinbarungen zwischen Telekommunikationsanbietern. Darüber hinaus reduziert sich der durch Fragmentierung entstehende Overhead, wodurch die Netzwerklast verringert, die Latenz optimiert und die allgemeine Dienstqualität verbessert wird. Die Erfindung erlaubt es somit, bestehende Netzwerkinfrastrukturen effizienter zu nutzen und gleichzeitig eine flexible Anpassung an zukünftige Entwicklungen zu gewährleisten, in denen höhere MTU-Werte über 1500 Byte hinaus unterstützt werden könnten. Die erfindungsgemäße Lösung stellt somit ein System bereit, das die maximale MTU-Größe für IPX-Provider verwaltet und eine standardisierte, automatisierte Aushandlung der optimalen MTU-Größe für die gesamte Übertragungskette ermöglicht.

In einer besonders vorteilhaften Ausführungsform hat die bezüglich der Telekommunikationsanbieter und dem IPX-Provider an die Verwaltungseinheit mitgeteilte MTU jeweils die maximal nutzbare Größe für deren Netzwerke. Das bedeutet, dass für jeden Netzwerkteilnehmer der größtmögliche MTU-Wert hinterlegt ist, den seine Infrastruktur technisch unterstützen kann. Auf diese Weise wird sichergestellt, dass die Aushandlung der einheitlichen MTU auf Basis der bestmöglichen Werte erfolgt und nicht durch konservativ gewählte oder veraltete MTU-Werte unnötig eingeschränkt wird. Das verhindert eine ungewollte Reduzierung der effektiven Datenpaketgröße und sorgt dafür, dass die Netzwerkkapazitäten optimal genutzt werden. Darüber hinaus ermöglicht diese Maßnahme eine flexible Anpassung an zukünftige Entwicklungen in der Netzwerktechnologie. Da moderne und kommende Kommunikationssysteme, insbesondere 5G- und 6G-Netze, potenziell höhere MTU-Werte als die derzeit üblichen 1500 Byte unterstützen können, erlaubt die Erfindung eine dynamische Berücksichtigung dieser Möglichkeiten, sofern alle beteiligten Netzwerke dies unterstützen. Dies trägt zur Verbesserung der Übertragungseffizienz und zur Reduzierung von Fragmentierungseffekten bei.

Vorteilhafterweise wird die Größe der jeweils nutzbaren MTU von den beteiligten Netzwerkteilnehmern im Vorfeld des Verbindungsaufbaus, gegebenenfalls auf Anfrage, direkt an die zentrale Verwaltungseinheit übermittelt, wobei der erste Telekommunikationsanbieter eine erste MTU, der zweite eine zweite MTU und der IPX-Provider eine dritte MTU bereitstellt. Durch diese direkte Übermittlung wird sichergestellt, dass die zentrale Verwaltungseinheit mit den jeweils aktuellen und tatsächlichen MTU-Werten arbeitet, die von den Netzwerkteilnehmern unterstützt werden. Das ermöglicht eine präzise und zuverlässige Bestimmung der optimalen MTU für die gesamte Übertragungskette, ohne auf vordefinierte Standardwerte oder Annahmen angewiesen zu sein.

In einer anderen vorteilhaften Ausführungsform werden die Größen der mitgeteilten MTUs nicht direkt von den Netzwerkteilnehmern übermittelt, sondern in einer zentralen MTU-Datenbank (MNO & IPX Provider DB) hinterlegt, aus der sie dann entnommen werden. In dieser MNO & IPX Provider DB sind die MTU-Werte einer Vielzahl von IPX-Providern und Telekommunikationsanbietern gespeichert. Mit der Nutzung einer solchen Datenbank entfällt die Notwendigkeit, die MTU-Werte für jede Aushandlung insbesondere vor jedem Verbindungsaufbau individuell abzufragen. Stattdessen kann die zentrale Verwaltungseinheit direkt auf eine verlässliche und standardisierte Quelle zugreifen, wodurch der Prozess der MTU-Ermittlung beschleunigt und vereinfacht wird. Das reduziert den administrativen Aufwand und stellt sicher, dass die ausgehandelten Werte auf einer konsistenten und geprüften Datengrundlage beruhen.

Zudem ermöglicht die Speicherung der MTU-Werte in der zentralen Datenbank eine langfristige Nachverfolgbarkeit und einfache Anpassung an sich ändernde Netzwerkinfrastrukturen. Wenn ein Netzwerkteilnehmer seine maximal unterstützte MTU aktualisiert, kann diese Information in der Datenbank hinterlegt und bei der nächsten Aushandlung automatisch berücksichtigt werden. Dadurch bleibt das System flexibel und zukunftssicher, insbesondere in Hinblick auf die Entwicklung hin zu größeren MTU-Werten in modernen und kommenden Kommunikationsnetzen. Die erfindungsgemäße MNO & IPX Provider DB verwaltet somit die maximal zu verwendende MTU-Größe eines jeden IPX-Providers und Telekommunikationsanbieters. Hingegen bietet die derzeit bekannte RAEX-Datenbank (Roaming Agreement Exchange) den IPX-Providern und MNOs zwar die Möglichkeit, operative Roamingdaten (RAEX OpData) und kommerzielle Roamingtarifinformationen (RAEX IOT) zentral auszutauschen, diese enthält jedoch keine Informationen zur maximal verwendbaren MTU-Größe einzelner Netzbetreiber.

Es kann darüber hinaus vorteilhaft sein, wenn die Werte der jeweils für die zwei Telekommunikationsanbieter und den mindestens einen IPX-Provider bestimmten einheitlichen MTU in Verbindung mit der Information über die Identität der jeweiligen Netzwerkteilnehmer in einer Kollaborationsdatenbank gespeichert werden. Durch die Speicherung der ausgehandelten MTU-Werte in einer solchen zentralen Kollaborationsdatenbank wird sichergestellt, dass die einmal ermittelten Werte für zukünftige Übertragungen zwischen diesen Netzwerkteilnehmern schnell abrufbar sind. Das reduziert den Aufwand für wiederholte Aushandlungen derselben MTU zwischen denselben Beteiligten und trägt noch ein weiteres zu einer effizienteren Nutzung der Netzwerkressourcen bei.

Zudem ermöglicht die Kollaborationsdatenbank eine kontinuierliche Überwachung und Nachverfolgbarkeit der verwendeten MTU-Werte. Falls sich Netzwerkinfrastrukturen oder unterstützte MTU-Werte ändern, kann diese Datenbank entsprechend aktualisiert werden, um eine stets optimale und fragmentierungsfreie Datenübertragung sicherzustellen. Das verbessert nicht nur die Flexibilität des Systems, sondern auch die Transparenz und Nachvollziehbarkeit der MTU-Aushandlungen zwischen den beteiligten Netzbetreibern. Die Kollaborationsdatenbank dient somit dazu, den größten zwischen Telekommunikationsanbietern und IPX-Providern vereinbarten und verabschiedeten MTU-Wert zu speichern und als verbindlichen Wert für die Netzwerkkonfiguration zu nutzen. Dieser abgestimmte Wert stellt sicher, dass alle beteiligten Netzwerkteilnehmer mit einer einheitlichen und verlässlichen MTU arbeiten, wodurch eine konsistente, fragmentierungsfreie und effiziente Datenübertragung über IPX-Netze ermöglicht wird.

Vorteilhafterweise werden die MTU-Datenbank und die Kollaborationsdatenbank von einer zentralen Verwaltungseinheit verwaltet, die insbesondere der GSM Association (GSMA) angehört. Durch die zentrale Verwaltung der Datenbanken wird sichergestellt, dass die ermittelten MTU-Werte konsistent und für alle beteiligten Netzwerkteilnehmer zuverlässig abrufbar sind. Die GSMA als anerkannte Institution im Bereich der Telekommunikation bietet eine neutrale und standardisierte Plattform zur Koordination der MTU-Aushandlung, wodurch eine globale Interoperabilität zwischen verschiedenen Netzbetreibern erleichtert wird. Zudem ermöglicht die zentrale und standardisierte Verwaltung eine kontinuierliche Aktualisierung der gespeicherten MTU-Werte, um auf Änderungen in den Netzwerkinfrastrukturen oder technischen Spezifikationen flexibel reagieren zu können. Dies stellt sicher, dass die ausgehandelten Werte stets den aktuellen technischen Möglichkeiten der beteiligten Netzwerkteilnehmer entsprechen und eine optimale, fragmentierungsfreie Datenübertragung gewährleistet bleibt.

In einer weiteren besonders vorteilhaften Ausführungsform wird die einheitliche MTU als Roaming-MTU für den Roaming-Datenverkehr in mobilen Kommunikationsnetzwerken genutzt. Dadurch wird sichergestellt, dass Datenpakete auch beim Übergang zwischen verschiedenen Mobilfunknetzen ohne Fragmentierung übertragen werden können, selbst wenn Netzbetreiber unterschiedliche technische Voraussetzungen oder Infrastrukturbegrenzungen haben. Die abgestimmte Roaming-MTU ermöglicht eine optimierte Datenübertragung und trägt dazu bei, Latenzen zu reduzieren, Paketverluste zu vermeiden und die Netzwerkeffizienz im internationalen Mobilfunkverkehr zu verbessern.

Dabei ist es vorteilhaft, wenn der Wert der Roaming-MTU an die Betriebssysteme (OSS) der Mobilfunknetzbetreiber (MNOs) übermittelt wird, die mit den jeweiligen Telekommunikationsanbietern in Verbindung stehen. Dadurch wird sichergestellt, dass die verhandelten MTU-Werte nicht nur zentral festgelegt, sondern auch direkt in die Netzwerksteuerungssysteme der beteiligten Betreiber integriert werden. Dies ermöglicht eine automatische Anpassung der Netzwerkkonfiguration an die ausgehandelte Roaming-MTU und gewährleistet eine konsistente Umsetzung in der gesamten Übertragungskette.

Weiterhin ist es vorteilhaft, die Roaming-MTU, die von den Mobilfunknetzbetreibern genutzt wird, dynamisch anzupassen. Die Anpassung kann entweder auf Endgeräteebene erfolgen, indem die MTU des User Equipment (UE) auf den kleineren Wert aus der eigenen MTU und der ausgehandelten Roaming-MTU gesetzt wird, oder auf Netzwerkebene durch eine Anpassung der Gateway-MTU des Mobilfunknetzbetreibers, falls dessen eigene MTU kleiner ist als die Roaming-MTU.

Durch diese flexible Anpassungsmöglichkeit wird sichergestellt, dass die Netzwerkinfrastruktur und die Endgeräte optimal auf die ausgehandelten MTU-Werte abgestimmt sind. Dies verhindert inkonsistente MTU-Werte entlang der Übertragungskette, die zu unnötiger Fragmentierung oder ineffizienter Datenübertragung führen könnten. Zudem ermöglicht die dynamische Anpassung eine bessere Integration der Roaming-MTU in bestehende Netzwerkkonfigurationen, wodurch Mobilfunknetzbetreiber eine höhere Servicequalität für ihre Kunden bieten können.

Es ist darüber hinaus auch von Vorteil, die von den Telekommunikationsanbietern und den IPX-Providern an die zentrale Verwaltungseinheit übermittelten MTU-Werte regelmäßig zu aktualisieren. Somit wird sichergestellt, dass stets die aktuellen und tatsächlich nutzbaren MTU-Werte für die Aushandlung herangezogen werden. Netzwerkinfrastrukturen und deren technische Rahmenbedingungen können sich im Laufe der Zeit ändern, sei es durch Software-Updates, Hardware-Upgrades oder Änderungen an den Netzwerkrichtlinien. Eine regelmäßige Aktualisierung der MTU-Werte verhindert, dass veraltete oder nicht mehr gültige Werte verwendet werden, wodurch eine maximale Netzwerkeffizienz gewährleistet bleibt.

Ebenso ist es vorteilhaft, wenn die einheitliche MTU nicht nur anhand der übermittelten MTU-Werte, sondern zusätzlich unter Berücksichtigung weiterer von den Telekommunikationsanbietern bereitgestellter Netzwerkparameter, wie Netzwerklatenz, Paketverlust oder QoS-Anforderungen, bestimmt wird. Diese zusätzlichen Faktoren ermöglichen eine noch präzisere Optimierung der Datenübertragung, indem nicht nur die technische Kompatibilität, sondern auch die tatsächliche Netzqualität in die Berechnung der optimalen MTU einfließt. Das trägt insbesondere dazu bei, die Stabilität der Verbindung zu verbessern und die Leistung für Echtzeit-Anwendungen wie VoIP oder Videostreaming zu optimieren. Vorteilhafterweise sendet die zentrale Verwaltungseinheit eine automatische Benachrichtigung an die beteiligten Telekommunikationsanbieter, sobald eine neue einheitliche MTU-Größe ermittelt wurde. Dadurch werden die Netzbetreiber unmittelbar über Änderungen informiert und können diese ohne Verzögerung in ihre Netzwerkkonfigurationen übernehmen. Dies sorgt für eine schnelle und reibungslose Implementierung der ausgehandelten MTU-Werte und vermeidet Probleme, die durch inkonsistente oder veraltete Konfigurationswerte entstehen könnten. Die automatische Benachrichtigung stellt zudem sicher, dass alle beteiligten Parteien jederzeit über die aktuell gültige MTU informiert sind, was die Koordination und Verwaltung der Netzwerkinfrastruktur erheblich erleichtert.

Im Übrigen ist es vorteilhaft, wenn die einheitlichen MTU-Werte über einen definierten Zeitraum als gültig festgelegt werden, wobei nach Ablauf dieses Zeitraums eine erneute Aushandlung der MTU-Werte automatisch initiiert wird. Dadurch wird verhindert, dass einmal festgelegte Werte dauerhaft bestehen bleiben, ohne an veränderte Netzwerkanforderungen angepasst zu werden. Eine regelmäßige Neubewertung stellt sicher, dass sich die MTU immer an die aktuellen technischen Gegebenheiten und Kapazitäten der beteiligten Netzwerke anpasst. Das erhöht die Flexibilität des Systems und zukünftige Entwicklungen, wie die schrittweise Erhöhung der unterstützten MTU-Größen in modernen Kommunikationsnetzen, können nahtlos integriert werden.

In einer vorteilhaften Ausführungsform kann das erfindungsgemäße System als eigenständige Desktopapplikation, als Serverapplikation oder als integraler Bestandteil eines Netzwerkmanagementsystems betrieben werden. Dadurch wird eine flexible Implementierung ermöglicht, die an die jeweiligen Anforderungen von Telekommunikationsanbietern und IPX-Providern angepasst werden kann.

Als Desktopapplikation kann das System beispielsweise für manuelle Konfigurations- und Monitoring-Zwecke genutzt werden, während eine Serverapplikation eine automatisierte, kontinuierliche Verarbeitung und Speicherung von MTU-Werten ermöglicht. Die Integration in ein Netzwerkmanagementsystem (NMS) erlaubt es, die MTU-Aushandlung direkt in bestehende Netzwerkinfrastrukturen einzubinden und die Verwaltung der ausgehandelten Werte mit anderen netzwerkbezogenen Parametern zu koordinieren. Diese vielseitigen Bereitstellungsmöglichkeiten stellen sicher, dass das System flexibel skaliert werden kann und sowohl für kleine Netzwerkanbieter als auch für große, global agierende Telekommunikationsunternehmen geeignet ist.

Nachfolgend wird die Erfindung anhand der Figuren 1 bis 3 näher erklärt. Es zeigen:
- **Figur 1**: die Veränderung der Paketgröße bei notwendiger Fragmentierung,
- **Figur 2**: eine schematische Darstellung des Systems und
- **Figur 3**: Beispiele für die Verwaltung und Aushandlung von MTU-Werten.

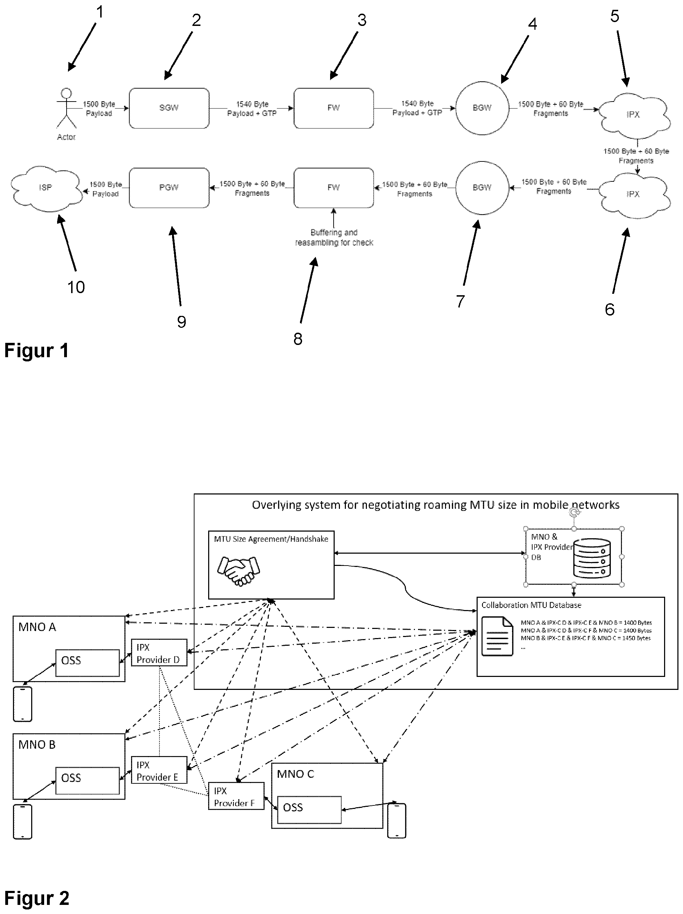

Figur 1 veranschaulicht die Veränderung der Paketgröße in einem Übertragungsprozess nach dem Stand der Technik innerhalb eines mobilen Netzwerks, insbesondere unter Berücksichtigung der zusätzlichen GTP-Kapselung und der daraus resultierenden Fragmentierung. Ursprünglich beträgt die Paketgröße beim Sender 1 noch 1500 Byte, was der typischen Maximum Transmission Unit (MTU) entspricht, die in vielen Netzwerken verwendet wird. Sobald das Paket das Serving Gateway 2 (SGW) passiert, wird es mit einem zusätzlichen GTP-Header versehen, wodurch sich die Gesamtgröße auf 1540 Byte erhöht. Diese Vergrößerung setzt sich auch beim Durchlaufen der Firewall 3 (FW) fort, bevor das Paket schließlich beim Border Gateway 4 (BGW) ankommt.

Da die IPX-Netze 5 und 6 eine maximale MTU von 1500 Byte haben, kann das auf 1540 Byte angewachsene Paket nicht mehr als Ganzes übertragen werden. Stattdessen muss es fragmentiert werden, wodurch es in kleinere Teile aufgesplittet wird - im Schaubild dargestellt als 1500 Byte + 60 Byte Fragments. Dieser Prozess findet sowohl auf dem Weg vom PGW 4 (Packet Gateway) in das IPX-Netzwerk 5 als auch bei der Weiterleitung über Firewalls und Border Gateways statt.

Der untere Pfad zeigt, wie die Pakete vom zweiten IPX-Netzwerk 6 über verschiedene Netzwerkknoten bis hin zum Internet Service Provider (ISP) weitergeleitet werden. Ausgangspunkt ist ein bereits fragmentiertes Paket im IPX-Netz 6 mit einer Gesamtgröße von 1500 Byte + 60 Byte Overhead. Das fragmentierte Paket passiert zunächst das Border Gateway 7 (BGW), das die Pakete unverändert weiterleitet. Anschließend durchläuft es eine Firewall 8 (FW), wo es vorübergehend zwischengespeichert (Buffering) und überprüft wird ("reassembling for check"). Das bedeutet, dass die Firewall 8 die Fragmente in bestimmten Fällen wieder zusammensetzt, um sie auf Sicherheitsbedrohungen zu analysieren. Dieser Zwischenschritt kann eine zusätzliche Verzögerung in der Datenübertragung verursachen, da das erneute Zusammensetzen und erneute Fragmentieren des Pakets einen zusätzlichen Rechenaufwand erfordert.

Nach der Firewall 8 wird das Paket an das Packet Gateway 9 (PGW) weitergeleitet, das eine zentrale Rolle bei der Weiterleitung von Daten zwischen dem Mobilfunknetz und externen IP-Netzwerken spielt. Das PGW 9 überträgt die fragmentierten Pakete schließlich an den Internet Service Provider 10 (ISP), wobei die ursprüngliche Nutzlast von 1500 Byte erhalten bleibt, jedoch weiterhin mit den 60 Byte zusätzlichen Fragmenten transportiert wird.

Figur 1 zeigt somit anschaulich die technische Herausforderung der GTP-Kapselung in mobilen Netzwerken: Die Pakete überschreiten die übliche MTU-Grenze von 1500 Byte, was eine erzwungene Fragmentierung zur Folge hat. Dies kann nicht nur die Netzwerkeffizienz beeinträchtigen, sondern auch zu Problemen bei der Paketübertragung und -wiederherstellung führen. Die Erfindung adressiert genau dieses Problem, indem sie eine koordinierte Aushandlung der MTU-Werte zwischen den beteiligten Netzwerkteilnehmern ermöglicht, um eine fragmentierungsfreie Übertragung sicherzustellen.

Figur 2 zeigt das erfindungsgemäße *"Overlying System for Negotiating Roaming MTU Size in Mobile Networks",* das eine zentrale Rolle bei der Aushandlung und Verwaltung der MTU-Größe zwischen verschiedenen Netzwerkteilnehmern spielt. Es veranschaulicht die Interaktion zwischen Mobilfunknetzbetreibern (MNOs), IPX-Providern und einer zentralen Verwaltungseinheit, die für die Koordination und Speicherung der ausgehandelten MTU-Werte verantwortlich ist. Jeder MNO betreibt ein eigenes Operational Support System (OSS), das für die Netzwerkkonfiguration und die Umsetzung der vereinbarten MTU-Werte zuständig ist. Die Verbindung zwischen den MNOs erfolgt über verschiedene IPX-Provider, die als Vermittler zwischen den Netzwerken fungieren.

Im Zentrum des Systems befindet sich eine Verwaltungseinheit, die aus drei Hauptkomponenten besteht: dem MTU Size Agreement/Handshake, der MNO & IPX Provider DB und der Collaboration MTU Database. Die MNO & IPX Provider DB speichert die maximal unterstützten MTU-Werte der einzelnen IPX-Provider und Telekommunikationsanbietern, während die Collaboration MTU Database die zwischen den Providern und Telekommunikationsanbietern ausgehandelten und vereinbarten MTU-Werte verwaltet. Im Rahmen des MTU Size Agreement/Handshake handeln die IPX-Provider und Telekommunikationsanbietern untereinander die maximal nutzbare MTU aus, wobei stets die kleinste kompatible MTU als verbindlicher Wert für die gesamte Verbindungskette festgelegt wird.

Nach Abschluss der Aushandlung werden die festgelegten MTU-Werte an die beteiligten IPX-Provider und MNOs übermittelt, sodass deren Netzwerke und Endgeräte die Werte entsprechend anpassen können. Dies ermöglicht eine fragmentierungsfreie Datenübertragung, reduziert den Overhead und verbessert die Effizienz der gesamten Kommunikationsinfrastruktur. Durch die zentrale Speicherung der MTU-Werte in einer gemeinsamen Datenbank wird sichergestellt, dass zukünftige Übertragungen auf bereits verhandelte Werte zurückgreifen können, wodurch der Aushandlungsprozess optimiert und beschleunigt wird. Das System gewährleistet eine hohe Netzwerkkonsistenz und trägt dazu bei, die Servicequalität im internationalen Roaming-Verkehr zu verbessern.

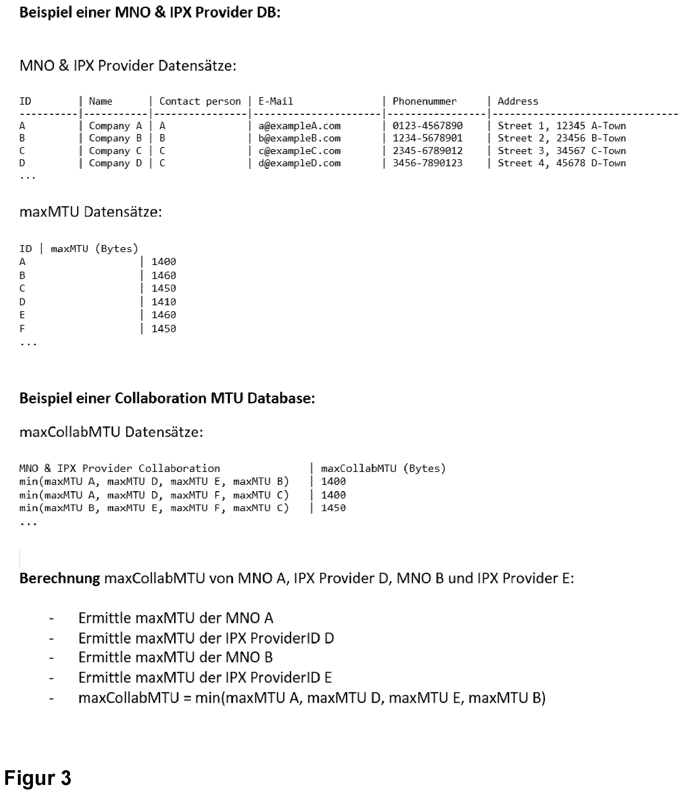

Die in Figur 3 dargestellten Daten veranschaulichen die Verwaltung und Aushandlung von MTU-Werten zwischen verschiedenen IPX-Providern und Telekommunikationsanbietern innerhalb eines Telekommunikationsnetzwerks. In der ersten Tabelle sind die MNO & IPX Provider Datensätze aufgeführt, die Informationen zu den beteiligten Netzwerkanbietern enthalten, darunter deren ID, Name, Kontaktperson, E-Mail-Adresse, Telefonnummer und physische Adresse. Diese Daten dienen als zentrale Grundlage für die Koordination zwischen den Netzwerkanbietern und ermöglichen eine strukturierte Verwaltung der jeweiligen MTU-Werte.

Die zweite Tabelle zeigt die maximal unterstützte MTU für jeden einzelnen IPX-Provider oder Telekommunikationsanbieter. Diese Werte legen fest, welche maximale Paketgröße ein Provider technisch verarbeiten kann, bevor eine Fragmentierung erforderlich wird. Während MNO A eine maximale MTU von 1400 Bytes unterstützt, erlauben MNO B und C größere MTU-Werte von 1460 bzw. 1450 Bytes. Da unterschiedliche Netzwerkanbieter verschiedene MTU-Grenzen haben, ist eine Abstimmung erforderlich, um eine einheitliche und fragmentierungsfreie Datenübertragung sicherzustellen.

In der dritten Tabelle ist die Collaboration MTU Database dargestellt, die die ausgehandelten MTU-Werte für verschiedene Kombinationen von IPX-Providern und Telekommunikationsanbietern enthält. Diese Werte werden basierend auf der geringsten gemeinsamen MTU festgelegt, um eine reibungslose Datenübertragung zwischen den Netzwerken zu gewährleisten. Beispielsweise beträgt die verhandelte MTU zwischen MNO A, IPX-Provider B, IPX-Provider E und MNO B 1400 Bytes, da dies der kleinste Wert der beiden ist. Die Speicherung dieser vereinbarten Werte in einer zentralen Datenbank ermöglicht eine effiziente und automatisierte MTU-Aushandlung für zukünftige Verbindungen und trägt zur Optimierung der Netzwerkauslastung und -qualität bei.

Die nachfolgende Berechnung der maxCollabMTU für MNO A, IPX-Provider B, IPX-Provider E und MNO B Providerzeigt den grundlegenden Mechanismus zur Bestimmung der gemeinsam nutzbaren MTU-Größe zwischen zwei IPX-Providern und zwei Netzwerkanbietern. Zunächst wird die maximal unterstützte MTU (maxMTU) für jeden einzelnen Provider und Telekommunikationsanbieter ermittelt. Diese Werte stellen die technisch möglichen Höchstgrenzen dar, die ein Netzwerkanbieter für die Übertragung von Datenpaketen ohne Fragmentierung unterstützt.

Nachfolgend eine exemplarische Berechnung maxCollabMTU von MNO A, IPX Provider D, MNO B und IPX Provider E:
- Ermittle maxMTU der MNO A
- Ermittle maxMTU der IPX ProviderID D
- Ermittle maxMTU der MNO B
- Ermittle maxMTU der IPX ProviderID E
- maxCollabMTU = min(maxMTU A, maxMTU D, maxMTU E, maxMTU B)

Um eine fragmentierungsfreie Kommunikation zwischen den beteiligten IPX-Providern und Telekommunikationsanbietern zu ermöglichen, wird im nächsten Schritt die gemeinsame MTU-Größe festgelegt. Dabei wird die kleinere der zu berücksichtigenden maxMTU-Werte als maxCollabMTU bestimmt, sodass sichergestellt ist, dass beide Provider Datenpakete in voller Größe ohne Aufteilung weiterleiten können. Dieser Ansatz verhindert inkonsistente Paketgrößen entlang der Übertragungskette und sorgt für eine stabile und effiziente Datenübertragung.

Die gezeigte Berechnung ist essenziell für die dynamische MTU-Aushandlung innerhalb des Netzwerks, da sie sicherstellt, dass alle Netzwerkteilnehmer mit einem kompatiblen MTU-Wert arbeiten. Durch die automatisierte Ermittlung der maxCollabMTU wird der Prozess optimiert und die Netzwerkauslastung verbessert, während gleichzeitig Latenzen und potenzielle Paketverluste durch Fragmentierung reduziert werden.

## Patentansprüche

1. Verfahren zur Übertragung von Datenpaketen in einer Ende zu Ende (E2E) Verbindung innerhalb einer IP-basierten Telekommunikationsnetzwerk-Infrastruktur unter Verwendung einer einheitlichen Datenpaketgröße (MTU, Maximum Transmission Unit), wobei die Datenpakete von einem ersten Telekommunikationsanbieter über einen IP-Exchange Anbieter (IPX-Provider) zu einem zweiten Telekommunikationsanbieter übertragen werden,
**dadurch gekennzeichnet,**
- **dass** für die beiden Telekommunikationsanbieter und den IPX-Provider die Größe einer für ihn jeweils nutzbaren MTU einer zentralen Verwaltungseinheit mitgeteilt werden,
- **dass** die zentrale Verwaltungseinheit als einheitliche MTU die kleinste der mitgeteilten MTUs bestimmt,
- **dass** die zentrale Verwaltungseinheit die Größe der einheitlichen MTU dem ersten Telekommunikationsanbieter übermittelt und
- **dass** der erste Telekommunikationsanbieter die Datenpakete unter Verwendung der einheitlichen MTU über den IPX Provider an den zweiten Telekommunikationsanbieter überträgt.

2. Verfahren nach Anspruch 1,
**dadurch gekennzeichnet, dass**
die von den Telekommunikationsanbietern und dem IPX-Provider jeweils mitgeteilte Größe für die MTU die jeweils maximal nutzbare Größe einer MTU hat.

3. Verfahren nach Anspruch 1 oder 2,
**dadurch gekennzeichnet, dass**
sich die Größe einer MTU in Byte bemisst.

4. Verfahren nach einem der Ansprüche 1 bis 3,
**dadurch gekennzeichnet, dass**
vom ersten Telekommunikationsanbieter die Größe für eine erste MTU, vom zweiten Telekommunikationsanbieter die Größe für eine zweite MTU und vom IPX-Provider die Größe für eine dritte MTU an die zentrale Verwaltungseinheit übermittelt werden.

5. Verfahren nach einem der Ansprüche 1 bis 3,
**dadurch gekennzeichnet, dass**
die Größen der mitgeteilten MTUs einer MTU-Datenbank (MNO & IPX Provider DB) entnommen werden, in der MTU-Werte einer Vielzahl von IPX-Providern und Telekommunikationsanbietern gespeichert sind.

6. Verfahren nach einem der vorherigen Ansprüche,
**dadurch gekennzeichnet, dass**
die Werte der jeweils für zwei Telekommunikationsanbieter und dem einen oder den beiden beteiligten IPX-Providern bestimmten einheitlichen MTU in einer Kollaborationsdatenbank gespeichert werden.

7. Verfahren nach einem der vorherigen Ansprüche,
**dadurch gekennzeichnet, dass**
die MTU-Datenbank und die Kollaborationsdatenbank von der zentralen Verwaltungseinheit verwaltet werden, die insbesondere der GSM Association (GSMA) angehört.

8. Verfahren nach einem der vorherigen Ansprüche,
**dadurch gekennzeichnet, dass**
die einheitliche MTU als Roaming-MTU für den Roaming-Datenverkehr in mobilen Kommunikationsnetzwerken genutzt wird.

9. Verfahren nach Anspruch 8,
**dadurch gekennzeichnet, dass**
der Wert der Roaming-MTU an die Betriebssysteme (OSS) der Mobilfunknetzbetreiber (MNOs) übermittelt werden, die mit den jeweiligen Telekommunikationsanbietern in Verbindung stehen.

10. Verfahren nach Anspruch 9,
**dadurch gekennzeichnet, dass**
die Roaming-MTU, die von den Mobilfunknetzbetreibern genutzt wird, angepasst wird entweder
- durch Anpassung der Endgeräte-MTU des Endnutzers (User Equipment, UE) auf den kleineren Wert aus der eigenen MTU und der Roaming-MTU, oder
- durch Anpassung der Gateway-MTU des Mobilfunknetzbetreibers auf die Roaming-MTU, falls dessen eigene MTU kleiner ist als die Roaming-MTU.

11. Verfahren nach einem der vorherigen Ansprüche,
**dadurch gekennzeichnet, dass**
die von den Telekommunikationsanbietern und den IPX-Providern an die zentrale Verwaltungseinheit übermittelten MTU-Werte regelmäßig aktualisiert werden.

12. Verfahren nach einem der vorherigen Ansprüche,
**dadurch gekennzeichnet, dass**
die einheitliche MTU unter Berücksichtigung zusätzlicher von den Telekommunikationsanbietern bereitgestellter Netzwerkparameter, wie Netzwerklatenz, Paketverlust oder QoS-Anforderungen, ermittelt wird.

13. Verfahren nach einem der vorherigen Ansprüche,
**dadurch gekennzeichnet, dass**
die zentrale Verwaltungseinheit eine automatische Benachrichtigung an die beteiligten Telekommunikationsanbieter sendet, wenn eine neue einheitliche MTU-Größe ermittelt wird.

14. Verfahren nach einem der vorherigen Ansprüche,
**dadurch gekennzeichnet, dass**
die einheitlichen MTU-Werte über einen definierten Zeitraum als gültig festgelegt werden, wobei nach Ablauf dieses Zeitraums eine erneute Aushandlung der einheitlichen MTU-Werte automatisch initiiert wird.

15. Verfahren nach einem der vorherigen Ansprüche, betrieben als eigenständige Desktopapplikation, als Serverapplikation oder als ein in ein Netzwerkmanagementsystem integriertes System.

16. Telekommunikationssystem zur Übertragung von Datenpaketen in einer Ende-zu-Ende (E2E) Verbindung innerhalb einer IP-basierten Telekommunikationsnetzwerk-Infrastruktur unter Verwendung einer einheitlichen Datenpaketgröße (MTU, Maximum Transmission Unit), umfassend:
- einen ersten Telekommunikationsanbieter,
- einen zweiten Telekommunikationsanbieter,
- einen IP-Exchange-Anbieter (IPX-Provider) und
- eine zentrale Verwaltungseinheit,
**dadurch gekennzeichnet, dass**
- der erste Telekommunikationsanbieter, der zweite Telekommunikationsanbieter und der IPX-Provider jeweils eine für ihn nutzbare MTU an die zentrale Verwaltungseinheit übermitteln,
- die zentrale Verwaltungseinheit als einheitliche MTU die kleinste der drei übermittelten MTUs bestimmt,
- die zentrale Verwaltungseinheit die bestimmte einheitliche MTU an den ersten Telekommunikationsanbieter übermittelt, und
- der erste Telekommunikationsanbieter die Datenpakete unter Verwendung der einheitlichen MTU an den zweiten Telekommunikationsanbieter überträgt.

17. Telekommunikationssystem nach Anspruch 16,
**dadurch gekennzeichnet, dass**
die von den Telekommunikationsanbietern und dem IPX-Provider jeweils übermittelte MTU die von dem Beteiligten jeweils maximal nutzbare MTU darstellt.

18. Telekommunikationssystem nach Anspruch 16 oder 17,
**dadurch gekennzeichnet, dass**
die zentrale Verwaltungseinheit eine MTU-Datenbank (MNO & IPX Provider DB) umfasst, in der MTU-Werte einer Vielzahl von Telekommunikationsanbietern und IPX-Providern gespeichert sind.

19. Telekommunikationssystem nach einem der Ansprüche 16 bis 18,
**dadurch gekennzeichnet, dass**
die zentrale Verwaltungseinheit eine Kollaborationsdatenbank umfasst, in der die jeweils für eine Kombination aus zwei Telekommunikationsanbietern und einem IPX-Provider bestimmte einheitliche MTU gespeichert wird.
